# EUROPEAN PATENT APPLICATION

(11) **EP 1 205 730 A1**
(43) Date of publication of application: **15.05.2002**
(21) Application number: 00901943.1
(22) Date of filing: 27.01.2000
(51) Int. Cl.: G01C 21/00, G08G 1/13, G08B 25/10

(54) **EMERGENCY INFORMATION SYSTEM**

(71) Applicant: MATSUSHITA ELECTRIC INDUSTRIAL CO., LTD., Kadoma-shi, Osaka 571-0050 (JP)
(72) Inventor: YOSHIOKA, Kenji, Yokohama-shi, Kanagawa 222-0034 (JP); NAKAMA, Yasutoshi, Ikoma-shi, Nara 630-0041 (JP); YAMAMOTO, Masashi, Sagamihara-shi, Kanagawa 229-0004 (JP)
(74) Representative: Hössle, Markus, Dipl.-Phys.
(86) International application number: JP0000427
(87) International publication number: WO0155678

(57) **Abstract**

The present invention provides an emergency communication system for transmitting an emergency information such as traffic accident, sudden illness, etc., to a center such as police station from an emergency communication conveying means installed on a vehicle, whereby, even when communication partner does not respond or the line is busy at the emergency communication transmission, it is possible to perform emergency transmission, and a control unit 12 gives emergency communication to a telephone number of the communication partner from emergency communication conveying means 11. In case no response is received from the communication partner or a signal indicating that the line is busy is received, different telephone numbers of the communication partner as stored in a storage unit 15 are read one after another, and emergency communication is performed. When emergency communication is performed, the transmission is displayed on LED or LCD on dashboard of the vehicle, and further, this fact is stored in the storage unit 15 and can be picked up from outside via an interface 10 connected to an external equipment.

## Description

### TECHNICAL FIELD

The present invention relates to an emergency communication system installed on a vehicle such as an automobile and provided with emergency communication conveying means connected to an emergency communication system terminal unit and for performing emergency communication to police station, emergency communication center, etc. via the emergency communication conveying means.

### BACKGROUND ART

Conventionally, an emergency communication system has been known, by which, when an emergency such as traffic accident, sudden illness, etc. occurs while the user is driving a vehicle, data such as the present position of the vehicle or registered number of the vehicle, etc. are transmitted to a center, which controls emergency communication system such as police station, emergency communication center, etc. via emergency communication conveying means such as a handy phone provided on the vehicle.

However, in the conventional type emergency communication system, transmission from the emergency communication conveying means such as a handy phone is not received by the communication partner, i.e. the other party in the communication, or in case it is not possible to make contact with the communication partner from the reasons such as line is busy, it has been usually practiced to try again to request the calling to the same telephone number. In case of the transmission of such retrial using handy phone, there has been restriction that retrial callings to the same telephone number is limited to three times and three minutes each, and the number of callings within a fixed time is restricted, and it has been often impossible to transmit emergency information.

### DISCLOSURE OF THE INVENTION

To overcome the above problems in the prior art, it is an object of the present invention to provide an emergency communication system, by which emergency information can be transmitted even when it is not possible to make contact with the communication partner from the reason that line is busy, and the transmission from the emergency communication conveying means such as handy phone is not received.

To solve the above problems, according to the emergency communication system of the present invention, emergency communication conveying means in an emergency is maintained by automatically transmitting the other telephone number when it is not possible to make contact with the communication partner from the reason such as line is busy and when the transmission from the emergency communication conveying means such as handy phone is not received.

According to a basic aspect of the present invention, in an emergency communication system having an emergency communication system terminal unit installed on a vehicle, the emergency communication system terminal unit comprises an emergency communication transmission button for starting transmission processing when pressed by a user in an emergency, a gyro sensor for detecting advancing direction of the vehicle, a GPS antenna for receiving signal waves from a plurality of satellites, a GPS receiver for detecting data to obtain the present position of the vehicle from the signal waves received by the GPS antenna, a position information acquisition unit for generating position information based on signals from the gyro sensor and the GPS receiver, a storage unit for storing various types of data, emergency communication conveying means for transmitting emergency information using a telephone number stored in the storage unit when the emergency communication transmission button is pressed, and a control unit for controlling the entire system, whereby the control unit requests telephone transmission again to the emergency communication conveying means by acquiring a different telephone number from the storage unit when a signal is received from the emergency communication conveying means, indicating that the communication partner is still being called or the line is busy in an emergency communication. Even when it is not possible to make contact with the communication partner from the reason such as line is busy and the transmission from the emergency communication conveying means such as handy phone is not received, it is possible to maintain communication means in an emergency by requesting transmission using the other telephone number.

According to another aspect of the present invention, there is provided an emergency communication system, wherein, when telephone transmission is requested again to the emergency communication conveying means, transmission is requested using another telephone number as stored in the storage unit and different from the telephone number of the center for controlling the emergency communication system such as police station, emergency communication center, etc. Even when it is not possible to make contact with the communication partner, a different telephone number is acquired from the storage unit, transmission is requested again to the emergency communication conveying means, and it is possible to maintain communication means in an emergency.

According to still another aspect of the present invention, there is provided an emergency communication system, in which, when telephone transmission is requested again to the emergency communication conveying means, transmission is requested using a telephone number of a police station, i.e. a different telephone number stored in the storage unit. Even when it is not possible to make contact with the communication partner, communication means can be maintained in an emergency by acquiring a different telephone number of the storage unit and by requesting telephone call again to the emergency communication conveying means.

According to still another aspect of the present invention, there is provided an emergency communication system, in which, when telephone transmission is requested again to the emergency communication conveying means, transmission is requested using a telephone number of a fire department, i.e. a different telephone number stored in the storage unit. Even when it is not possible to make contact with the communication partner, communication means can be maintained in an emergency by acquiring a different telephone number of the storage unit and by requesting telephone call again to the emergency communication conveying means.

According to still another aspect of the present invention, there is provided an emergency communication system, in which, when telephone transmission is requested again to the emergency communication conveying means, transmission is requested using a telephone number registered by the user such as the telephone number of the user's own home, i.e. a different telephone number stored in the storage unit. Even when it is not possible to make contact with the communication partner, communication means can be maintained in an emergency by acquiring a different telephone number of the storage unit and by requesting telephone call again to the emergency communication conveying means.

According to still another aspect of the present invention, there is provided an emergency communication system, in which, when a signal is received from the emergency communication conveying means, indicating that the communication partner is still being called or line is busy during emergency communication, it is tried again to transmit telephone call to the communication partner, and in case it is not possible to make contact in the retrial, a different telephone number is acquired from the storage unit, and telephone call is requested again to the emergency communication conveying means. Even when it is not possible to make contact with the communication partner, a different telephone number is acquired from the storage unit after retrial of telephone call for once, and telephone call is requested again to the emergency communication conveying means, and it is possible to maintain communication means in an emergency.

According to still another aspect of the present invention, there is provided an emergency communication system, in which, when a signal is received from the emergency communication conveying means, indicating that the communication partner is still being called or line is busy, it is tried to call twice to the communication partner, and when it is still impossible to make contact in all of the retrials, a different telephone number is acquired from the storage unit, and telephone call is requested again to the emergency communication conveying means. Even when it is not possible to make contact with the communication partner, a different telephone number is acquired from the storage unit after trying to call twice, and telephone call is requested again to the emergency communication conveying means, and it is possible to maintain communication means in an emergency.

According to still another aspect of the present invention, there is provided an emergency communication system, in which, when a signal is received from the emergency communication conveying means, indicating that the communication partner is still being called or line is busy, it is tried to call three times to the communication partner, and when it is still impossible to make contact in all of the retrials, a different telephone number is acquired from the storage unit, and telephone call is requested again to the emergency communication conveying means. Even when it is not possible to make contact with the communication partner, a different telephone number is acquired from the storage unit after trying to call three times, and telephone call is requested again to the emergency communication conveying means, and it is possible to maintain communication means in an emergency.

According to still another aspect of the present invention, there is provided an emergency communication system, in which, when a signal is received from the emergency communication conveying means, indicating that the communication partner is still being called or line is busy, it is tried to call four times or more to the communication partner, and when it is still impossible to make contact in all of the retrials, a different telephone number is acquired from the storage unit, and telephone call is requested again to the emergency communication conveying means. Even when it is not possible to make contact with the communication partner, a different telephone number is acquired from the storage unit after trying to call four times or more, and telephone call is requested again to the emergency communication conveying means, and it is possible to maintain communication means in an emergency.

According to still another aspect of the present invention, there is provided an emergency communication system, in which, when a signal is received from the emergency communication conveying means, indicating that the communication partner is still being called but there is no response or that line is busy, the emergency communication processing is suspended, and a different telephone number is acquired from the storage unit and telephone call is requested again to the emergency communication conveying means. Even when it is not possible to make contact with the communication partner, instruction is given to the emergency communication conveying means to suspend the communication and a different telephone number is acquired from the storage unit, and by requesting telephone call again to the emergency communication conveying means, it is possible to maintain communication means in an emergency.

According to still another aspect of the present invention, there is provided an emergency communication system, in which, when a signal is received from the emergency communication conveying means, indicating that the communication partner is still being called but there is no response or that line is busy, the emergency communication processing is suspended, and a different telephone number is acquired from the storage unit, and telephone call is requested again to the emergency communication conveying means. Further, when a signal is received from the emergency communication conveying means, indicating that the communication partner is still being called but there is no response or that line is busy, the emergency communication processing is suspended, and still another telephone number is acquired from the storage unit and telephone call is requested again to the emergency communication conveying means. Even when it is not possible to make contact with the communication partner, communication means can be maintained in an emergency by acquiring a different telephone number from the storage unit after instructing the suspension of communication to the emergency communication conveying means and by requesting telephone call again to the emergency communication conveying means.

According to still another aspect of the present invention, there is provided an emergency communication system, in which, when a signal is received from the emergency communication conveying means, indicating that the communication partner is still being called but there is no response or that line is busy, the emergency communication processing is suspended, and a different telephone number is acquired from the storage unit and telephone call is requested again to the emergency communication conveying means, whereby a different telephone number is registered, and telephone call is requested to this registered telephone number. Even when it is not possible to make contact with the communication partner, communication means can be maintained in an emergency by acquiring a different telephone number from the storage unit after instructing the suspension of communication to the emergency communication conveying means and by requesting telephone call again to the emergency communication conveying means.

According to still another aspect of the present invention, there is provided an emergency communication system, in which, when a signal is received from the emergency communication conveying means, indicating that the communication partner is still being called but there is no response or that line is busy, the emergency communication processing is suspended, and a different telephone number is acquired from the storage unit and telephone call is requested again to the emergency communication conveying means, whereby two different telephone numbers are registered, and telephone call is transmitted to a first of these two telephone numbers, and in case a signal is received from the emergency communication conveying means, indicating that the communication partner is still being called but there is no response or that line is busy, telephone call is requested to the other of the two telephone numbers. Even when it is not possible to make contact with the communication partner, communication means can be maintained in an emergency by acquiring a different telephone number from the storage unit after instructing the suspension of communication to the emergency communication conveying means and by requesting telephone call again to the emergency communication conveying means.

According to still another aspect of the present invention, there is provided an emergency communication system, in which, when a signal is received from the emergency communication conveying means, indicating that the communication partner is still being called but there is no response or that line is busy, the emergency communication processing is suspended, and a different telephone number is acquired from the storage unit and telephone call is requested again to the emergency communication conveying means, whereby three different telephone numbers are registered, and telephone call is transmitted to a first of the three telephone numbers and when a signal is received from the emergency communication conveying means, indicating that the communication partner is being called but there is no response or that line is busy, telephone call is requested to the second of the three telephone numbers, and further, in case a signal is received from the emergency communication conveying means, indicating that the communication partner is still being called but there is no response or that line is busy, telephone call is requested to the third of the three telephone numbers. Even when it is not possible to make contact with the communication partner, communication means can be maintained in an emergency by acquiring a different telephone number from the storage unit after instructing the suspension of communication to the emergency communication conveying means and by requesting telephone call again to the emergency communication conveying means.

According to still another aspect of the present invention, there is provided an emergency communication system, in which, when a signal is received from the emergency communication conveying means, indicating that the communication partner is still being called but there is no response or that line is busy, the emergency communication processing is suspended, and a different telephone number is acquired from the storage unit and telephone call is requested again to the emergency communication conveying means, whereby four different telephone numbers are registered, and telephone call is transmitted to a first of the four telephone numbers, and in case a signal is received from the emergency communication conveying means, indicating that the communication partner is still being called but there is no response or that line is busy, telephone call is requested to a different telephone number among the four telephone numbers, and further, in case a signal is received from the emergency communication conveying means, indicating that the communication partner is still being called but there is no response or that line is busy, and the transmission processing is continued as many times as the number of the registered telephone numbers. Even when it is not possible to make contact with the communication partner, communication means can be maintained in an emergency by acquiring a different telephone number from the storage unit after instructing the suspension of communication to the emergency communication conveying means and by requesting telephone call again to the emergency communication conveying means.

According to still another aspect of the present invention, there is provided an emergency communication system, in which, when a signal is received from the emergency communication conveying means, indicating that the communication partner is being called but there is no response or that line is busy, the emergency communication processing is suspended, and a different telephone number is acquired from the storage unit, and telephone call is requested again to the emergency communication conveying means. Further, in case a signal is received from the emergency communication conveying means, indicating that the communication partner is still being called but there is no response or that line is busy, transmission of the telephone call is requested again to the communication partner, to whom the first communication has been transmitted. Even when it is not possible to make contact with the communication partner, communication means can be maintained in an emergency by acquiring a different telephone number from the storage unit after instructing the suspension of communication to the emergency communication conveying means and by requesting telephone call again to the emergency communication conveying means.

According to still another aspect of the present invention, there is provided an emergency communication system, in which, when a signal is received from the emergency communication conveying means, indicating that the communication partner is still being called but there is no response or that line is busy, the emergency communication processing is suspended, and a different telephone number is acquired from the storage unit and telephone call is requested again to the emergency communication conveying means. Further, in case a signal is received from the emergency communication conveying means, indicating that the communication partner is still being called but there is no response or that line is busy, transmission of the telephone call is requested again to the communication partner, to whom the first communication has been transmitted. Further, in case a signal is received from the emergency communication conveying means, indicating that the communication partner is still being called but there is no response or that line is busy, transmission is requested to the different telephone number. Even when it is not possible to make contact with the communication partner, communication means can be maintained in an emergency by acquiring a different telephone number from the storage unit after instructing the suspension of communication to the emergency communication conveying means and by requesting telephone call again to the emergency communication conveying means.

According to still another aspect of the present invention, there is provided an emergency communication system, which is provided with means for transmitting to the user an information as to which telephone number is being called at present. It is possible to transmit to the user an information as to which telephone number is being called at present.

According to still another aspect of the present invention, there is provided the emergency communication processing using the emergency communication system of the basic aspect as described above, wherein voice transmitting means using sound synthesis is used as the means for transmitting to the user an information as to which telephone number is being called at present. As a result, it is possible to transmit to the user an information as to which telephone number is being called at present.

According to still another aspect of the present invention, there is provided the emergency communication processing using the emergency communication system of the basic aspect as described above, wherein transmitting means of character display using display means such LCD element is used as the means for transmitting to the user an information as to which telephone number is being called at present. As a result, it is possible to transmit to the user an information as to which telephone number is being called at present.

According to still another aspect of the present invention, in the emergency communication processing in the emergency communication system of the basic aspect as described above, an information as to which telephone number has been called is recorded as history. As a result, it is possible to confirm later which telephone number has been called.

According to still another aspect of the present invention, when an information as to which telephone number has been called is recorded as history during the emergency communication processing in the emergency communication system of the basic aspect as described above, day and time of the transmission and the transmitted telephone number are recorded. As a result, it is possible to confirm later which telephone number has been called and when the transmission has been made.

According to still another aspect of the present invention, during the emergency communication processing in the emergency communication system of the basic aspect as described above, in case an information as to which telephone number has been called and when the transmission has been made is recorded as history, there is provided means for outputting the contents of the recording. As a result, it is possible to confirm later when and to which telephone number the transmission has been made and with what kind of recording.

According to still another aspect of the present invention, during the emergency communication processing in the emergency communication system of the basic aspect as described above, in case an information as to which telephone number has been called and when the transmission has been made is recorded as history, a non-synchronizing serial signal is used as the means for outputting the contents of the recording. As a result, it is possible to output the contents of the transmission using the non-synchronizing serial signal.

According to still another aspect of the present invention, during the emergency communication processing in the emergency communication system of the basic aspect as described above, in case an information as to which telephone number has been called and when the transmission has been made is recorded as history, synchronizing serial signal is used as the means for outputting the contents of the recording, and the contents of the transmission can be outputted using the synchronizing serial signal.

According to still another aspect of the present invention, during the emergency communication processing in the emergency communication system of the basic aspect as described above, in case an information as to which telephone number has been called and when the transmission has been made is recorded as history, a bus signal communication signal is used as the means for outputting the contents of the recording. As a result, it is possible to output the contents of the transmission using bus communication signal.

According to still another aspect of the present invention, during the emergency communication processing in the emergency communication system of the basic aspect as described above, in case an information as to which telephone number has been called and when the transmission has been made is recorded as history, LAN is used as the means for outputting the contents of the recording. As a result, it is possible to output the contents of the transmission using LAN.

According to still another aspect of the present invention, during the emergency communication processing in the emergency communication system of the basic aspect as described above, in case an information as to which telephone number has been called and when the transmission has been made is recorded as history, an infrared signal is used as the means for outputting the contents of the recording. As a result, it is possible to output the contents of the transmission using bus infrared signal.

According to still another aspect of the present invention, during the emergency communication processing in the emergency communication system of the basic aspect as described above, in case an information as to which telephone number has been called and when the transmission has been made is recorded as history, a radio signal is used as the means for outputting the contents of the recording. As a result, it is possible to output the contents of the transmission using radio signal.

According to still another aspect of the present invention, in the emergency communication system of the basic aspect as described above, when communication in the first emergency communication transmission has failed and the next telephone number stored in the storage unit is called, the next telephone number can be set by the user. In addition to the telephone numbers of the center for the control of the emergency communication system, a telephone number retained in the storage unit is set by the user and is recorded in the storage unit. As a result, it is possible to maintain communication means in an emergency.

### BRIEF DESCRIPTION OF THE DRAWINGS

Fig. 1 is a block diagram of arrangement of an embodiment of an emergency communication system of the present invention;
Fig. 2 is a block diagram showing an arrangement of the emergency communication system in an eighteenth embodiment and others;
Fig. 3 is a block diagram showing an arrangement of the emergency communication system in a twenty-third embodiment and others; and
Fig. 4 is a block diagram showing an arrangement of the emergency communication system in a thirtieth embodiment and others.

In the following, detailed description will be given on embodiments of the present invention referring to the drawings.

### (Embodiment 1)

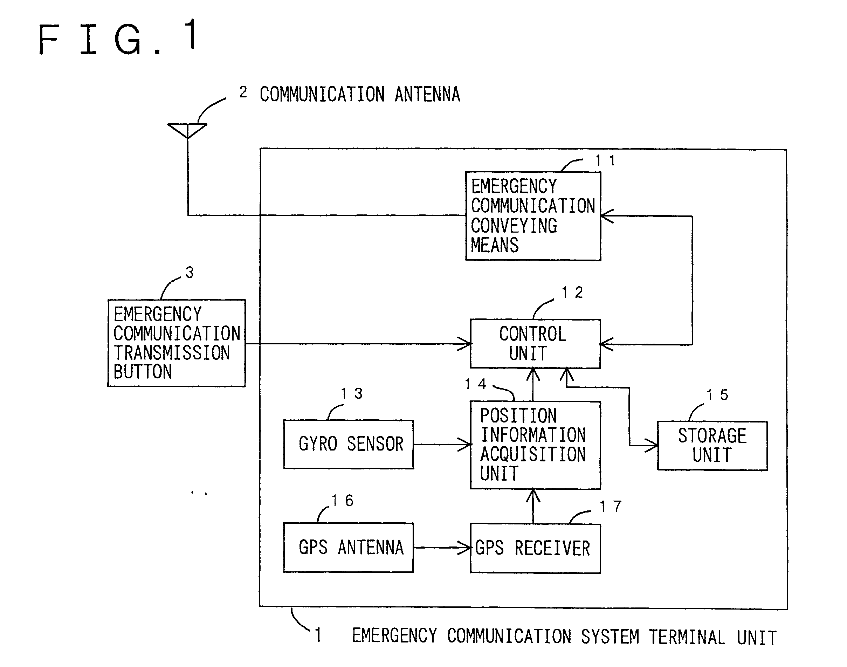

Fig. 1 is a block diagram showing an arrangement of a first embodiment of an emergency communication system of the present invention. In Fig. 1, reference numeral 1 represents an emergency communication system terminal unit installed on a vehicle such as an automobile. For example, it has the function to transmit data such as the present position of a vehicle, registered number of the vehicle, etc. to a center for the control of emergency communication system such as police station or emergency communication center in an emergency, e.g. traffic accident, sudden illness, etc. via a communication antenna 2. Reference numeral 3 denotes an emergency communication transmission button for generating an operation signal to start transmission processing when a user presses it in an emergency such as traffic accident, sudden illness, etc. Reference numeral 13 is a gyro sensor for detecting advancing direction of the vehicle, 14 is a position information acquisition unit for generating position information based on a signal from the gyro sensor 13 and a GPS receiver 17. Reference numeral 15 is a storage unit for storing various types of data, 16 is a GPS antenna for receiving data from satellites, 17 is a GPS receiver for detecting the present position of the vehicle based on the data received from the GPS antenna 16, 12 is a control unit for controlling the entire system, and 11 is emergency communication conveying means for transmitting emergency information using a telephone number stored in the storage unit 15.

In response to a transmission requesting signal from the control unit 12, the emergency communication conveying means 11 starts telephone transmission processing to a communication partner corresponding to the telephone number via a base station of a communication firm using a telephone number inputted from the control unit 12. When a response signal from the communication partner is received, it is recognized that it has been switched to communication status, and it is shifted to voice communication control or data communication control. Then, a signal notifying that it has been switched to communication status is outputted to the control unit 12. Further, data such as advancing direction of the vehicle and position information inputted from the control unit 12 are transmitted to a center for the control of emergency communication system such as police station, emergency communication center, etc., i.e. a communication partner corresponding to the telephone number, via a base station of a communication firm.

The control unit 12 recognizes that there has been an emergency communication request based on the operation signal from the emergency communication transmission button 3 and outputs a signal for requesting the present position information at the position information acquisition unit 14 in order to start the emergency communication processing. At the same time, the data such as information on advancing direction of the vehicle, position information, etc. are outputted from the position information acquisition unit 14. Further, a telephone number of a center for controlling emergency communication system such as police station, emergency communication center, etc. is acquired, and transmission of telephone to the emergency communication conveying means 11 is requested using the telephone number. Then, in case a response signal from the communication partner corresponding to the telephone number has been received from the emergency communication conveying means 11, it is recognized that it has been switched to communication status. Then, a signal for transmitting the data such as information on advancing direction of the vehicle and position information received from the position information acquisition unit 14 are outputted to the emergency communication conveying means 11 in order to output the signal for transmitting the data to a center for controlling emergency communication system such as police station, emergency communication center, etc, i.e. to a communication partner corresponding to the telephone number, via a base station of a communication firm. In case a signal is received from the emergency communication conveying means 11, indicating that the partner gives no response or it is not possible to make contact because line is busy, another telephone number is acquired from the storage unit 15, and transmission of telephone call is requested again to the emergency communication conveying means 11.

The gyro sensor 13 generates information such as advancing direction of the vehicle and outputs it to the position information acquisition unit 14. In response to the position information request signal from the control unit 12, the position information acquisition unit 14 inputs the data from the gyro sensor 13 which generates information such as advancing direction of the vehicle. Also, the data received from the GPS antenna 16 by the GPS receiver 17 is inputted. Further, based on the data such as advancing direction of the vehicle inputted from the gyro sensor 13 and the data inputted from the GPS receiver 17, position information is generated, and this is outputted to the control unit 12 together with the data on the advancing direction.

The storage unit 15 stores information such as a telephone number of a center for the control of emergency communication system such as police station, emergency communication center, etc. as well as the information such as registered number of the vehicle with the emergency communication system terminal unit 1 installed on it, and the data on registered person. In response to a request signal from the control unit 12, the storage unit outputs the information the telephone number of the center for the control of emergency communication system such as police station, emergency communication center, etc. as well as the information such as registered number of the vehicle with the emergency communication system terminal unit 1 installed on it, and the data on registered person.

Next, description will be given on operation of the first embodiment. In Fig. 1, in the emergency communication system installed on a vehicle such as automobile, an emergency communication transmission button 3 is pressed by a user in an emergency such as traffic accident, sudden illness, etc. When pressed by the user, the emergency communication transmission button 3 outputs an operation signal, indicating that it has been pressed, to the control unit 12 provided in the emergency communication system terminal unit 1. The control unit 12 recognizes that there has been an emergency communication request according to the operation signal from the emergency communication transmission button 3. Then, emergency communication processing is started, and a signal requesting the present position information is outputted to the position information acquisition unit 14.

In response to the position information requesting signal from the control unit 12, the position information acquisition unit 14 inputs the data from the gyro sensor 13, which generates information such as advancing direction of the vehicle, and also inputs the data received from the GPS antenna 16 by the GPS receiver 17. Further, the position information acquisition unit 14 generates a position information based on the data such as advancing direction of the vehicle inputted from the gyro sensor 13 and the data inputted from the GPS receiver 17, and this information is outputted to the control unit 12 together with the data on advancing direction.

The control unit 12 acquires the telephone number of the center for controlling the emergency communication system such as police station, emergency communication center, etc. from the storage unit 15 and requests transmission of telephone call to the emergency communication conveying means 11 using the telephone number. The emergency communication conveying means 11 starts telephone transmission processing to a communication partner corresponding to the telephone number via a base station of a communication firm using a communication antenna 2. Further, when a response signal is received from the communication partner, the emergency communication conveying means 11 recognizes that it has been shifted to communication status, and it is switched to voice communication control or data communication control, and a signal indicating that it has been shifted to communication status is outputted to the control unit 12.

The control unit 12 judges that the communication has been successful, and the data such as advancing direction of the vehicle and position information received from the position information acquisition unit 14 are transmitted to a center for the control of emergency communication system such as police station, emergency communication center, etc. (i.e. a communication partner corresponding to the telephone number) via a base station of a communication firm.

To the telephone transmission request from the control unit 12, when no transmission is received from the emergency communication conveying means 11 such as handy phone or when it is not possible to make contact with the communication partner because line is busy, another telephone number of the center for controlling the emergency communication system such as police station, emergency communication center, etc. is acquired from the storage unit 15, and a telephone transmission is requested to the emergency communication conveying means 11 using this telephone number.

### (Embodiment 2)

Next, description will be given on operation of the emergency communication system of the present invention in a second embodiment. For the second embodiment, description will be given referring to Fig. 1. In the emergency communication system, telephone transmission is requested to the emergency communication conveying means 11 using a telephone number of a center for the control of emergency communication system such as police station, emergency communication center, etc. In case no transmission is received from the emergency communication conveying means 11 or in case it is not possible to make contact with the communication partner because line is busy, another telephone number of the center for the control of the emergency communication system such as police station, emergency communication center, etc. is acquired from the storage unit 15, and telephone transmission is requested to the emergency communication conveying means 11 using this telephone number.

### (Embodiment 3)

Next, description will be given on operation of the emergency communication system of the present invention in a third embodiment. For the third embodiment, description will be given referring to Fig. 1. In the emergency communication system, telephone transmission is requested to the emergency communication conveying means 11 using a telephone number of a center for the control of emergency communication system such as police station, emergency communication center, etc. In case no transmission is received from the emergency communication conveying means 11 or in case it is not possible to make contact with the communication partner because line is busy, another telephone number of the police station (different from the telephone number of a center for the control of emergency communication system such as police station, emergency communication center, etc.) is acquired from the storage unit 15, and telephone transmission is requested to the emergency communication conveying means 11 using this telephone number.

### (Embodiment 4)

Next, description will be given on operation of the emergency communication system of the present invention in a fourth embodiment. For the fourth embodiment, description will be given referring to Fig. 1. In the emergency communication system, telephone transmission is requested to the emergency communication conveying means 11 using a telephone number of a center for the control of emergency communication system such as police station, emergency communication center, etc. In case no transmission is received from the emergency communication conveying means 11 or in case it is not possible to make contact with the communication partner because line is busy, another telephone number of the fire department (different from the telephone number of a center for the control of emergency communication system such as police station, emergency communication center, etc.) is acquired from the storage unit 15, and telephone transmission is requested to the emergency communication conveying means 11 using this telephone number.

### (Embodiment 5)

Next, description will be given on operation of the emergency communication system of the present invention in a fifth embodiment. For the fifth embodiment, description will be given referring to Fig. 1. In the emergency communication system, telephone transmission is requested to the emergency communication conveying means 11 using a telephone number of a center for the control of emergency communication system such as police station, emergency communication center, etc. In case no transmission is received from the emergency communication conveying means 11 or in case it is not possible to make contact with the communication partner because line is busy, another telephone number of the center for the control of the emergency communication system such as police station, emergency communication center, etc., i.e. a telephone number registered by the user such as telephone number of the user's own home, is acquired from the storage unit 15, and telephone transmission is requested to the emergency communication conveying means 11 using this telephone number.

### (Embodiment 6)

Next, description will be given on operation of the emergency communication system of the present invention in a sixth embodiment. For the sixth embodiment, description will be given referring to Fig. 1. In the emergency communication system, telephone transmission is requested to the emergency communication conveying means 11 using a telephone number of a center for the control of emergency communication system such as police station, emergency communication center, etc. In case no transmission is received from the emergency communication conveying means 11 or in case it is not possible to make contact with the communication partner because line is busy, telephone transmission is requested again to the emergency communication conveying means 11 using telephone number of a center for controlling emergency communication system such as police station, emergency communication center, etc.

Further, in case the transmission from the emergency communication conveying means 11 is not received or in case it is not possible to make contact with the communication partner because line is busy, another telephone number of the center for the control of the emergency communication system such as police station, emergency communication center, etc. is acquired from the storage unit 15, and telephone transmission is requested to the emergency communication conveying means 11 using this telephone number.

### (Embodiment 7)

Next, description will be given on operation of the emergency communication system of the present invention in a seventh embodiment. For the seventh embodiment, description will be given referring to Fig. 1. In the emergency communication system, telephone transmission is requested to the emergency communication conveying means 11 using a telephone number of a center for the control of emergency communication system such as police station, emergency communication center, etc. In case no transmission is received from the emergency communication conveying means 11 or in case it is not possible to make contact with the communication partner because line is busy, it is tried again to have contact at least two times until a response is obtained from the emergency communication conveying means 11, and telephone transmission is requested to the emergency communication conveying means 11 using the telephone number of the center for controlling emergency communication system such as police station, emergency communication center, etc.

Further, in case the transmission from the emergency communication conveying means 11 is not received or in case it is not possible to make contact with the communication partner because line is busy, another telephone number of the center for controlling emergency communication system such as police station, emergency communication center, etc. is acquired from the storage unit 15, and telephone transmission is requested to the emergency communication conveying means 11 using this telephone number.

### (Embodiment 8)

Next, description will be given on operation of the emergency communication system of the present invention in an eighth embodiment. For the eighth embodiment, description will be given referring to Fig. 1. In the emergency communication system, telephone transmission is requested to the emergency communication conveying means 11 using a telephone number of a center for the control of emergency communication system such as police station, emergency communication center, etc. In case no transmission is received from the emergency communication conveying means 11 or in case it is not possible to make contact with the communication partner because line is busy, it is tried again to have contact at least three times until a response is obtained from the emergency communication conveying means 11, and telephone transmission is requested to the emergency communication conveying means 11 using the telephone number of the center for controlling emergency communication system such as police station, emergency communication center, etc.

Further, in case the transmission from the emergency communication conveying means 11 is not received or in case it is not possible to make contact with the communication partner because line is busy, another telephone number of the center for controlling emergency communication system such as police station, emergency communication center, etc. is acquired from the storage unit 15, and telephone transmission is requested to the emergency communication conveying means 11 using this telephone number.

### (Embodiment 9)

Next, description will be given on operation of the emergency communication system of the present invention in a ninth embodiment. For the ninth embodiment, description will be given referring to Fig. 1. In the emergency communication system, telephone transmission is requested to the emergency communication conveying means 11 using a telephone number of a center for the control of emergency communication system such as police station, emergency communication center, etc. In case no transmission is received from the emergency communication conveying means 11 or in case it is not possible to make contact with the communication partner because line is busy, it is tried again to have contact four times or more until a response is obtained from the emergency communication conveying means 11, and telephone transmission is requested to the emergency communication conveying means 11 using the telephone number of the center for controlling emergency communication system such as police station, emergency communication center, etc.

Further, in case the transmission from the emergency communication conveying means 11 is not received or in case it is not possible to make contact with the communication partner because line is busy, another telephone number of the center for controlling emergency communication system such as police station, emergency communication center, etc. is acquired from the storage unit 15, and telephone transmission is requested to the emergency communication conveying means 11 using this telephone number.

### (Embodiment 10)

Next, description will be given on operation of the emergency communication system of the present invention in a tenth embodiment. For the tenth embodiment, description will be given referring to Fig. 1. In the emergency communication system, telephone transmission is requested to the emergency communication conveying means 11 using a telephone number of a center for the control of emergency communication system such as police station, emergency communication center, etc. In case no transmission is received from the emergency communication conveying means 11 or in case it is not possible to make contact with the communication partner because line is busy, processing is performed to terminate transmission for telephone call and to switch over to standby status.

Further, when a transmission is received from the emergency communication conveying means 11 indicating that standby status for telephone call has been switched over to the status for transmission, another telephone number of the center for controlling the emergency communication system such as police station, emergency communication center, etc. is acquired from the storage unit 15, and telephone transmission is requested to the emergency communication conveying means 11 using this telephone number.

### (Embodiment 11)

Next, description will be given on operation of the emergency communication system of the present invention in an eleventh embodiment. For the eleventh embodiment, description will be given referring to Fig. 1. In the emergency communication system, the control unit 12 requests telephone transmission to the emergency communication conveying means 11 using the telephone number of the center for controlling the emergency communication system such as police station, emergency communication center, etc. In case a response from the emergency communication conveying means 11 is not received or in case it is not possible to make contact with the communication partner because line is busy, processing is performed to terminate the transmission for telephone call and to switch over to standby status.

Further, when a response is received from the emergency communication conveying means 11, indicating that it has been switched over from standby status to transmission status, another telephone number of the center for controlling the emergency communication system such as police station, emergency communication center, etc. is acquired from the storage unit 15, and telephone transmission is requested to the emergency communication conveying means 11 using the telephone number. In case transmission is not received from the emergency communication conveying means or in case it is not possible to take contact with the communication partner from the reason such as line is busy, processing is performed to the emergency communication conveying means again to terminate telephone transmission and to switch over to standby status.

Further, in case a response is received from the emergency communication conveying means 11, indicating that it has been switched over from standby status to transmission status, still another telephone number of the center for controlling the emergency communication system such as police station, emergency communication center, etc. is acquired again from the storage unit 15, and telephone transmission is requested to the emergency communication conveying means 11 using this telephone number.

### (Embodiment 12)

Next, description will be given on operation of the emergency communication system of the present invention in a twelfth embodiment. For the twelfth embodiment, description will be given referring to Fig. 1. In the emergency communication system, telephone transmission is requested to the emergency communication conveying means 11 using a telephone number of a center for the control of emergency communication system such as police station, emergency communication center, etc. In case no transmission is received from the emergency communication conveying means 11 or in case it is not possible to make contact with the communication partner because line is busy, processing is performed to terminate the transmission of telephone call and to switch over to standby status.

Further, in case a response is received from the emergency communication conveying means 11, indicating that it has been switched over from standby status to transmission status, a telephone number stored in the storage unit 15 is acquired, and telephone transmission is requested to the emergency communication conveying means 11 using this telephone number.

### (Embodiment 13)

Next, description will be given on operation of the emergency communication system of the present invention in a thirteenth embodiment. For the thirteenth embodiment, description will be given referring to Fig. 1. In the emergency communication system, telephone transmission is requested to the emergency communication conveying means 11 using a telephone number of a center for the control of emergency communication system such as police station, emergency communication center, etc. In case no transmission is received from the emergency communication conveying means 11 or in case it is not possible to make contact with the communication partner because line is busy, a first telephone number of the two telephone numbers as stored in the storage unit 15 is acquired, and telephone transmission is requested to the emergency communication conveying means 11 using this telephone number.

Further, when the transmission is not received from the emergency communication conveying means 11 or in case it is not possible to make contact with the communication partner from reasons such as line is busy, the second telephone number of two telephone numbers as stored in the storage unit 15 is acquired, and telephone transmission is requested to the emergency communication conveying means 11 using this telephone number.

### (Embodiment 14)

Next, description will be given on operation of the emergency communication system of the present invention in a fourteenth embodiment. For the fourteenth embodiment, description will be given referring to Fig. 1. In the emergency communication system, telephone transmission is requested to the emergency communication conveying means 11 using a telephone number of a center for the control of emergency communication system such as police station, emergency communication center, etc. In case no transmission is received from the emergency communication conveying means 11 or in case it is not possible to make contact with the communication partner because line is busy, a first telephone number of three telephone numbers as stored in the storage unit 15 is acquired, and telephone transmission is requested to the emergency communication conveying means 11 using this telephone number.

Further, when the transmission is not received from the emergency communication conveying means 11 or in case it is not possible to make contact with the communication partner from reasons such as line is busy, the next telephone number among the three telephone numbers as stored in the storage unit 15 is acquired, and telephone transmission is requested to the emergency communication conveying means 11 using this telephone number.

Further, when the transmission is not received from the emergency communication conveying means 11 or in case it is not possible to make contact with the communication partner from reasons such as line is busy, the last of the three telephone numbers as stored in the storage unit 15 is acquired, and telephone transmission is requested to the emergency communication conveying means 11 using this telephone number.

### (Embodiment 15)

Next, description will be given on operation of the emergency communication system of the present invention in a fifteenth embodiment. For the fifteenth embodiment, description will be given referring to Fig. 1. In the emergency communication system, telephone transmission is requested to the emergency communication conveying means 11 using a telephone number of a center for the control of emergency communication system such as police station, emergency communication center, etc. In case no transmission is received from the emergency communication conveying means 11 or in case it is not possible to make contact with the communication partner because line is busy, a first telephone number is acquired among four or more telephone numbers as stored in the storage unit 15 is acquired, and telephone transmission is requested to the emergency communication conveying means 11 using this telephone number.

Further, when the transmission is not received from the emergency communication conveying means 11 or in case it is not possible to make contact with the communication partner from reasons such as line is busy, the next telephone number among the four or more telephone numbers stored in the storage unit 15 is acquired. Then, telephone transmission is requested to the emergency communication conveying means 11 using this telephone number. In case the response from the emergency communication conveying means 11 indicates that it is not switched over to communication status, processing of transmission to the next telephone number stored in the storage unit 15 is continued until it is switched over to communication status.

### (Embodiment 16)

Next, description will be given on operation of the emergency communication system of the present invention in a sixteenth embodiment. For the sixteenth embodiment, description will be given referring to Fig. 1. In the emergency communication system, telephone transmission is requested to the emergency communication conveying means 11 using a telephone number of a center for the control of emergency communication system such as police station, emergency communication center, etc. In case no transmission is received from the emergency communication conveying means 11 or in case it is not possible to make contact with the communication partner because line is busy, telephone transmission is requested again to the emergency communication conveying means 11 using this telephone number.

Further, when the transmission is not received from the emergency communication conveying means 11 or in case it is not possible to make contact with the communication partner from reasons such as line is busy, another telephone of the center as stored in the storage unit 15 is acquired, and telephone transmission is requested to the emergency communication conveying means 11 using this telephone number.

Further, when the transmission is not received from the emergency communication conveying means 11 or in case it is not possible to make contact with the communication partner from reasons such as line is busy, the telephone number of the center as stored in the storage unit 15 is acquired again, and telephone transmission is requested to the emergency communication conveying means 11 using this telephone number.

### (Embodiment 17)

Next, description will be given on operation of the emergency communication system of the present invention in a seventeenth embodiment. For the seventeenth embodiment, description will be given referring to Fig. 1. In the emergency communication system, telephone transmission is requested to the emergency communication conveying means 11 using a telephone number of a center for the control of emergency communication system such as police station, emergency communication center, etc. In case no transmission is received from the emergency communication conveying means 11 or in case it is not possible to make contact with the communication partner because line is busy, telephone transmission is requested again to the emergency communication conveying means 11 using the telephone number of a center for the control of emergency communication system such as police station, emergency communication center, etc.

Further, when the transmission is not received from the emergency communication conveying means 11 or in case it is not possible to make contact with the communication partner from reasons such as line is busy, another telephone number of the center as stored in the storage unit 15 is acquired, and telephone transmission is requested to the emergency communication conveying means 11 using this telephone number.

Further, when the transmission is not received from the emergency communication conveying means 11 or in case it is not possible to make contact with the communication partner from reasons such as line is busy, the telephone number of the center as stored in the storage unit 15 is acquired again, and telephone transmission is requested to the emergency communication conveying means 11 using this telephone number.

Further, when the transmission is not received from the emergency communication conveying means 11 or in case it is not possible to make contact with the communication partner from reasons such as line is busy, another telephone number of the center as stored in the storage unit 15 is acquired, and telephone transmission is requested to the emergency communication conveying means 11 using this telephone number.

### (Embodiment 18)

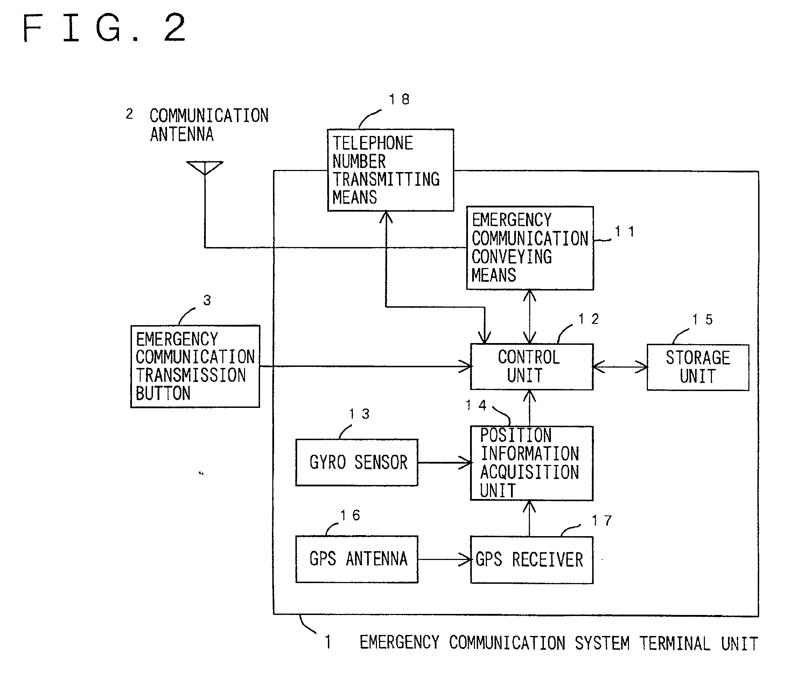

Next, description will be given on operation of the emergency communication system of the present invention in an eighteenth embodiment. Fig. 2 is a block diagram showing an arrangement of an emergency communication system in the eighteenth embodiment. In the emergency communication system, telephone transmission is requested to the emergency communication conveying means 11 using a telephone number of the center for controlling emergency communication system such as police station, emergency communication center, etc. The telephone number currently on transmission is outputted in display and voice output to telephone number transmitting means 18 such as display means, voice output means, etc. to transmit the telephone number to the user. Based on the instruction, the telephone number transmitting means 18 displays the telephone number.

Further, when the transmission is not received from the emergency communication conveying means 11 or in case it is not possible to make contact with the communication partner from reasons such as line is busy, another telephone number of the center as stored in the storage unit 15 is acquired, and telephone transmission is requested to the emergency communication conveying means 11 using this telephone number. Further, the telephone number currently on transmission is outputted in display and voice output to telephone number transmitting means 18 such as display means, voice output means, etc. to transmit the telephone number to the user. Based on the instruction, the telephone number transmitting means 18 displays the telephone number.

### (Embodiment 19)

Next, description will be given on operation of the emergency communication system of the present invention in a nineteenth embodiment. For the nineteenth embodiment, description will be given referring to Fig. 2. In the emergency communication system, telephone transmission is requested to the emergency communication conveying means 11 using a telephone number of the center for controlling emergency communication system such as police station, emergency communication center, etc. The output of telephone number currently on transmission is instructed to the telephone number transmitting means 18 for transmitting in voice such as voice synthetic sound output element. In case no transmission is received from the emergency communication conveying means 11 or in case it is not possible to make contact with the communication partner from the reasons such as line is busy, telephone transmission is requested again to the emergency communication conveying means 11 using the telephone number of the center for controlling emergency communication system such as police station, emergency communication center, etc. Also, the output of the telephone number currently on transmission is instructed to the telephone number transmitting means 18 for transmitting in voice such as voice synthetic sound output element. Based on the output instruction, the telephone number transmitting means 18 outputs the telephone number in voice.

### (Embodiment 20)

Next, description will be given on operation of the emergency communication system of the present invention in a twentieth embodiment. For the twentieth embodiment, description will be given referring to Fig. 2. In the emergency communication system, telephone transmission is requested to the emergency communication conveying means 11 using a telephone number of the center for controlling the emergency communication system such as police station, emergency communication center, etc. Display of the telephone number currently on transmission is instructed to the telephone number transmitting means 18 for transmitting by display output such as LCD. In case no transmission is received from the emergency communication conveying means 11 or in case it is not possible to make contact with the communication partner from the reasons such as line is busy, telephone transmission is requested again to the emergency communication conveying means 11 using the telephone number of the center for controlling emergency communication system such as police station, emergency communication center, etc. Also, the display of the telephone number currently on transmission is instructed to the telephone number transmitting means 18 for transmitting by display output such as LCD. Based on the display instruction, the telephone number transmitting means 18 displays the telephone number.

### (Embodiment 21)

Next, description will be given on operation of the emergency communication system of the present invention in a twenty-first embodiment. For the twenty-first embodiment, description will be given referring to Fig. 1. In the emergency communication system, telephone transmission is requested to the emergency communication conveying means 11 using a telephone number of the center for controlling the emergency communication system such as police station, emergency communication center, etc. Also, it is recorded in the storage unit that emergency communication processing has been performed. In case no response is received from the emergency communication conveying means 11 or in case it is not possible to make contact with the communication partner from the reasons such as line is busy, telephone transmission is requested again to the emergency communication conveying means 11 using the telephone number of the center for controlling the emergency communication system such as police station, emergency communication center, etc., and it is recorded in the storage unit 15 that emergency communication processing has been performed.

In case no transmission is received from the emergency communication conveying means 11 or in case it is not possible to make contact with the communication partner from the reasons such as line is busy, it is also recorded in the storage unit 15 that emergency communication processing has been performed at the next emergency transmission.

### (Embodiment 22)

Next, description will be given on operation of the emergency communication system of the present invention in a twenty-second embodiment. For the twenty-second embodiment, description will be given referring to Fig. 1. In the emergency communication system, telephone transmission is requested to the emergency communication conveying means 11 using a telephone number of a center for the control of emergency communication system such as police station, emergency communication center, etc. Then, the day and the time of the execution of emergency communication processing and the transmitted telephone number are recorded in the storage unit 15. In case no transmission is received from the emergency communication conveying means 11 or in case it is not possible to make contact with the communication partner because line is busy, telephone transmission is requested to the emergency communication conveying means 11 using this telephone number. Then, the day and the time of the execution of emergency communication processing and the transmitted telephone number are recorded in the storage unit 15.

In case no transmission is received from the emergency communication conveying means 11 or in case it is not possible to make contact with the communication partner because line is busy, the day and the time of the execution of emergency communication processing and the transmitted telephone number are recorded in the storage unit 15 again at the next emergency transmission.

### (Embodiment 23)

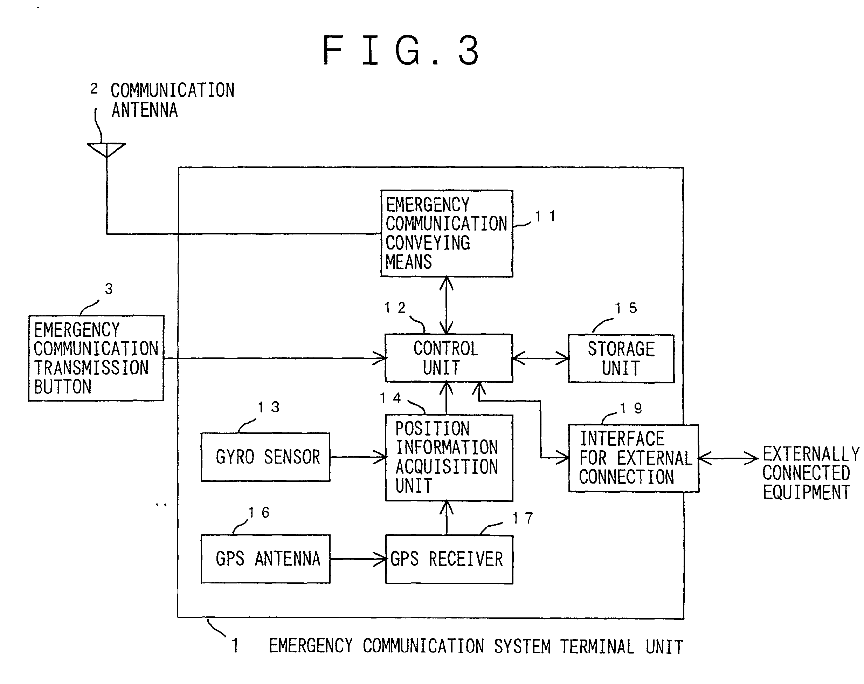

Next, description will be given on operation of the emergency communication system of the present invention in a twenty-third embodiment. Fig. 3 is a block diagram showing an arrangement of an emergency communication system in the twenty-third embodiment. In the emergency communication system, history data such as the day and the time of the execution of the emergency communication processing and the transmitted telephone number have been recorded in the storage unit 15. In response to an instruction to request the history data from an external equipment connected to an externally connected interface 19, the control unit 12 outputs the history data such as day and time of the execution of emergency communication processing and the transmitted telephone number recorded in the storage unit 15.

### (Embodiment 24)

Next, description will be given on operation of the emergency communication system of the present invention in a twenty-fourth embodiment. For the twenty-fourth embodiment, description will be given referring to Fig. 3. In the emergency communication system, history data such as the day and the time of the execution of the emergency communication processing and the transmitted telephone number have been recorded in the storage unit 15. In response to an instruction to request the history data from an external equipment connected to an externally connected interface 19, the control unit 12 outputs the history data such as day and time of the execution of emergency communication processing and the transmitted telephone number recorded in the storage unit 15, using non-synchronizing serial signal to transfer only with data communication.

### (Embodiment 25)

Next, description will be given on operation of the emergency communication system of the present invention in a twenty-fifth embodiment. For the twenty-fifth embodiment, description will be given referring to Fig. 3. In the emergency communication system, history data such as the day and the time of the execution of the emergency communication processing and the transmitted telephone number have been recorded in the storage unit 15. In response to an instruction to request the history data from an external equipment connected to an externally connected interface 19, the control unit 12 outputs the history data such as day and time of the execution of emergency communication processing and the transmitted telephone number recorded in the storage unit 15, using synchronizing serial signal such as frame synchronizing signal, clock synchronizing signal, etc.

### (Embodiment 26)

Next, description will be given on operation of the emergency communication system of the present invention in a twenty-sixth embodiment. For the twenty-sixth embodiment, description will be given referring to Fig. 3. In the emergency communication system, history data such as the day and the time of the execution of the emergency communication processing and the transmitted telephone number have been recorded in the storage unit 15. In response to an instruction to request the history data from an external equipment connected to an externally connected interface 19, the control unit 12 outputs the history data such as day and time of the execution of emergency communication processing and the transmitted telephone number recorded in the storage unit 15 by a bus signal using parallel signal.

### (Embodiment 27)

Next, description will be given on operation of the emergency communication system of the present invention in a twenty-seventh embodiment. For the twenty-seventh embodiment, description will be given referring to Fig. 3. In the emergency communication system, history data such as the day and the time of the execution of the emergency communication processing and the transmitted telephone number have been recorded in the storage unit 15. In response to an instruction to request the history data from an external equipment connected to an externally connected interface 19, the control unit 12 outputs the history data such as day and time of the execution of emergency communication processing and the transmitted telephone number recorded in the storage unit 15, using a LAN signal commonly used in network communication.

### (Embodiment 28)

Next, description will be given on operation of the emergency communication system of the present invention in a twenty-eighth embodiment. For the twenty-eighth embodiment, description will be given referring to Fig. 3. In the emergency communication system, history data such as the day and the time of the execution of the emergency communication processing and the transmitted telephone number have been recorded in the storage unit 15. In response to an instruction to request the history data from an external equipment connected to an externally connected interface 19, the control unit 12 outputs the history data such as day and time of the execution of emergency communication processing and the transmitted telephone number recorded in the storage unit 15, using infrared signal requiring no wired connection.

### (Embodiment 29)

Next, description will be given on operation of the emergency communication system of the present invention in a twenty-ninth embodiment. For the twenty-ninth embodiment, description will be given referring to Fig. 3. In the emergency communication system, history data such as the day and the time of the execution of the emergency communication processing and the transmitted telephone number have been recorded in the storage unit 15. In response to an instruction to request the history data from an external equipment connected to an externally connected interface 19, the control unit 12 outputs the history data such as day and time of the execution of emergency communication processing and the transmitted telephone number recorded in the storage unit 15, using the radio signal requiring no wired connection.

### (Embodiment 30)

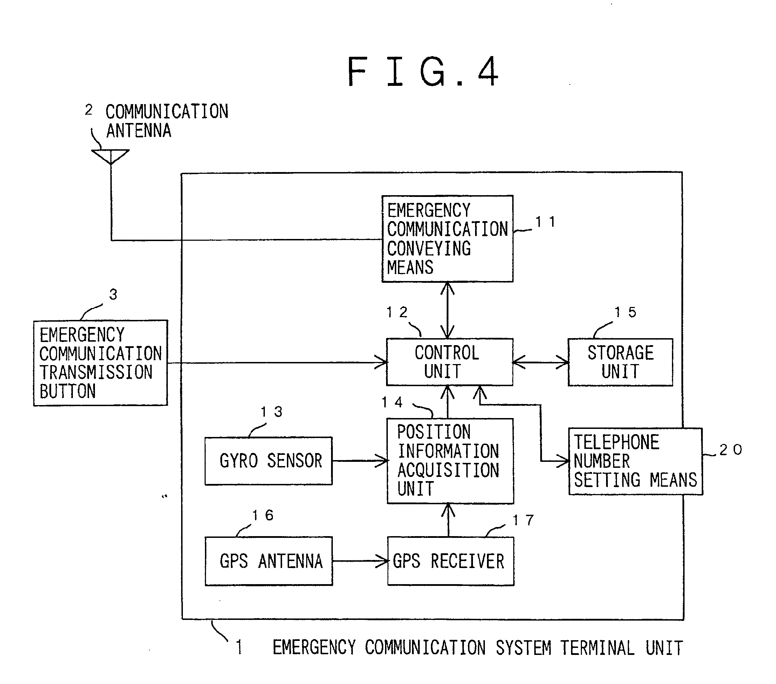

Next, description will be given on operation of the emergency communication system of the present invention in a thirtieth embodiment. Fig. 4 is a block diagram showing an arrangement of an embodiment of an emergency communication system in the thirtieth embodiment. In case no transmission is received from the emergency communication conveying means 11 or in case it is not possible to make contact with the communication partner from the reasons such as line is busy, the user instructs registration of another telephone number of the center for controlling the emergency communication system such as police station, emergency communication center, etc. for performing the next emergency communication processing using telephone number setting means 20 as possessed by the emergency communication system terminal unit 1. Upon receipt of the registration instruction, the telephone number setting means 20 instructs the recording of the telephone number to the control unit 12, and the control unit 15 records the telephone number in the storage unit 15. In the emergency communication transmission, the control unit 12 performs transmission processing using the telephone number registered by the registration instruction of the user and recorded in the storage unit 15 for the next transmission.

### INDUSTRIAL APPLICABILITY

As it is evident from the above description, the present invention provides an emergency communication system with the function to automatically start transmission of the data such as the present position of the vehicle, registered number of the vehicle, etc. to a center for controlling emergency communication system such as police station, emergency communication center, etc. in an emergency such as traffic accident, sudden illness, etc. When the control unit performs emergency transmission in response to an operation signal from emergency communication transmission button or to a request for emergency transmission from various types of sensors and in case transmission from the emergency communication conveying means such as handy phone is not received by the partner or when it is not possible to make contact with the communication partner from the reasons such as line is busy, the transmission using other telephone number is requested, and this makes it possible to maintain communication means at all times in an emergency.

## Claims

1. An emergency communication system, installed on a vehicle and provided with an emergency communication system terminal unit, said emergency communication system terminal unit comprises:
an emergency communication transmission button for starting transmission when pressed by a user in an emergency;
a gyro sensor for detecting advancing direction of the vehicle;
a GPS antenna for receiving signal waves from a plurality of satellites;
a GPS receiver for detecting data to obtain the present position of the vehicle from the signal waves received by the GPS antenna;
a position information acquisition unit for generating position information based on a signal from the gyro sensor and the GPS receiver;
a storage unit for storing various types of data;
an emergency communication conveying means for transmitting emergency information using a telephone number stored in the storage unit when the emergency communication transmission button is pressed; and
a control unit for controlling the entire system, whereby:
when a signal is received from the emergency communication conveying means, indicating that the communication partner is still being called or line is busy at the emergency calling, the control unit acquires another telephone number from the storage unit and requests telephone transmission again to the emergency communication conveying means.

2. An emergency communication system according to claim 1, wherein, when telephone transmission is requested again to the emergency communication conveying means, transmission is requested using another telephone number as stored in the storage unit and different from the telephone number of the center for controlling the emergency communication system such as police station, emergency communication center, etc.

3. An emergency communication system according to claim 1, wherein, when a signal is received from the emergency communication conveying means, indicating that the communication partner is still being called or that the line is busy, it is tried again to call the communication partner, and if it is not possible to make contact with the communication partner in the retrial for transmission, another telephone number is acquired from the storage unit, and telephone transmission is requested again to the emergency communication conveying means.

4. An emergency communication system according to claim 1, wherein, when a signal is received from the emergency communication conveying means, indicating that the communication partner is still being called or that the line is busy, the emergency communication processing is suspended, and another telephone number is acquired from the storage unit and telephone transmission is requested again to the emergency communication conveying means.

5. An emergency communication system according to claim 1, wherein, when a signal is received from the emergency communication conveying means, indicating that the communication partner is still being called or that the line is busy, the emergency communication processing is suspended, another telephone number is acquired from the storage unit, telephone transmission is requested again to the emergency communication conveying means, and further, in case a signal is received from the emergency communication means, indicating that the communication partner is still being called or the line is busy, the emergency communication processing is suspended, and still another telephone number is acquired from the storage unit and telephone transmission is requested again to the emergency communication conveying means.

6. An emergency communication system according to claim 1, wherein, when a signal is received from the emergency communication conveying means, indicating that the communication partner is still being called or that the line is busy, the emergency communication processing is suspended, and another telephone number is acquired from the storage unit, and when telephone transmission is requested again to the emergency communication conveying means, said another telephone number is registered in advance, and telephone transmission is requested to said another telephone number.

7. An emergency communication system according to claim 1, wherein, when a signal is received from the emergency communication conveying means, indicating that the communication partner is still being called or that the line is busy, the emergency communication processing is suspended, and another telephone number is acquired from the storage unit, and when telephone transmission is requested again to the emergency communication conveying means, two different telephone numbers are registered, and a first telephone number of these two telephone numbers is transmitted, and when a signal is received from the emergency communication conveying means, indicating that the communication partner is still being called or the line is busy, it is requested to transmit the next telephone number among said two telephone numbers.

8. An emergency communication system according to claim 1, wherein, when a signal is received from the emergency communication conveying means, indicating that the communication partner is still being called or that the line is busy, the emergency communication processing is suspended, another telephone number is acquired from the storage unit, and telephone transmission is requested again to the emergency communication conveying means, and when a signal is received from the emergency communication conveying means, indicating that the communication partner is still being called or the line is busy, transmission of telephone call is requested again to the communication partner, to whom the first telephone call was transmitted.

9. An emergency communication system according to claim 1, wherein, when a signal is received from the emergency communication conveying means, indicating that the communication partner is still being called or that the line is busy, the emergency communication processing is suspended, another telephone number is acquired from the storage unit, and transmission of telephone call is requested again to the emergency communication conveying means, and when a signal is received from the emergency communication conveying means, indicating that the communication partner is still being called or the line is busy, transmission of telephone call is requested again to the communication partner, to whom the first telephone call was transmitted, and when a signal is received again from the emergency communication conveying means, indicating that the communication partner is still being called or the line is busy, transmission of said different telephone number is requested.

10. An emergency communication system according to claim 1, wherein there is provided means for transmitting to the user an information as to which telephone number is being called currently in the emergency communication processing.

11. An emergency communication system according to claim 1, wherein an information as to which of the telephone numbers has been called in the emergency communication processing is recorded as history.

12. An emergency communication system according to claim 1, wherein, when an information as to which of the telephone numbers has been called is recorded as history in the emergency communication processing, day and time of the transmission and the transmitted telephone number are recorded.

13. An emergency communication system according to claim 1, wherein, when data such as when the transmission has been made and which of the telephone numbers has been called are recorded as history in the emergency communication processing, there is provided means for outputting the contents of said recording.

14. An emergency communication system according to claim 1, wherein, in case the data such as when the transmission has been made and which of the telephone numbers has been called are recorded as history in the emergency communication processing, one of non-synchronizing serial signal, synchronizing serial signal, bus communication signal, LAN signal, infrared signal or radio signal is used as the means for outputting the contents of said recording.

15. An emergency communication system according to claim 1, wherein, when calling by the first emergency communication transmission has failed in the emergency communication processing, and when the next telephone number recorded in the storage unit is called, said telephone number can be set by the user.
